# EUROPEAN PATENT APPLICATION

(11) **EP 4 831 438 A1**
(43) Date of publication of application: **28.10.2026**
(21) Application number: 26166799.2
(22) Date of filing: 23.03.2026
(51) Int. Cl.: F01D 5/14, F01D 5/28, F01D 9/04

(54) **COMPOSITE AIRFOIL ASSEMBLY FOR A TURBINE ENGINE**

(30) Priority: 22.04.2025 US 202519185730
(71) Applicant: General Electric Company, Evendale, OH 45215 (US)
(72) Inventor: KRAY, Nicholas Joseph, West Chester, 45069 (US); YADAV, Abhijeet Jayshingrao, 560066 Bengaluru (IN); JAIN, Nitesh, 560066 Bengaluru (IN); SIBBACH, Arthur William, Massachusetts, 01910 (US); XIE, Ming, Evendale, 45215 (US); ARMSTRONG, Douglas Lorrimer, Lynn, 45215 (US)
(74) Representative: Openshaw & Co.

(57) **Abstract**

An airfoil assembly (110) for a turbine engine (10) including a composite body (144, 244) comprising a layup of fibers (146, 246) and having an outer surface (145) defining a pressure side (133, 233) and a suction side (135, 235) extending between a leading edge (125, 225) and the trailing edge (127, 227). At least two cavities (146, 146a, 146b, 246) located in the composite body (144, 244) and opening onto the outer surface (145), the at least two cavities (146, 146a, 146b, 246) being in spaced relationship to define an interstitial composite element (148, 248) formed from the composite body (144, 244) and the interstitial composite element (148, 248) defines a primary axis (P) and the layup of fibers (156) in the interstitial composite element (148, 248) extend along the primary axis (P). Further, a composite skin (150) overlying the composite body (144, 244) and covering the at least two cavities (146, 146a, 146b, 246).

## Description

### TECHNICAL FIELD

The disclosure generally relates to a composite airfoil assembly, and more specifically, to a composite airfoil assembly for a turbine engine.

### BACKGROUND

A turbine engine typically includes an engine core with a compressor section, a combustor section, and a turbine section in serial flow arrangement. A fan section can be provided upstream of the compressor section. The compressor section compresses air which is channeled to the combustor section where it is mixed with fuel, where the mixture is then ignited for generating hot combustion gases. The combustion gases are channeled to the turbine section which extracts energy from the combustion gases for powering the compressor section, as well as for producing useful work to propel an aircraft in flight or to power a load, such as an electrical generator.

With the advent of composite materials, composites have been used to make components of the turbine engine, especially in lower temperature regions, for example, the blades of the fan section. Composite materials typically include a fiber-reinforced matrix and exhibit a high strength to weight ratio. Due to the high strength to weight ratio and moldability to adopt relatively complex shapes, composite materials are utilized in various applications, such as a turbine engine or an aircraft. Composite materials can be, for example, installed on or define a portion of the fuselage and/or wings, rudder, manifold, airfoil, or other components of the aircraft or turbine engine.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a turbine engine.
FIG. 2 is a schematic perspective view of an aircraft including an unducted or open rotor turbine engine.
FIG. 3 is a schematic perspective view of a composite airfoil assembly and a disk assembly suitable for use within the turbine engine of FIG. 1 or FIG. 2, the composite blade assembly including a composite airfoil, cladding, and a dovetail, in accordance with an exemplary embodiment of the present disclosure.
FIG. 4 is a schematic exploded view of FIG. 3 showing a composite body and composite skins of the composite airfoil assembly, in accordance with an exemplary embodiment of the present disclosure.
FIG. 5 is an enlarged view of the composite core of the composite airfoil assembly of FIG. 3, in accordance with an exemplary embodiment of the present disclosure.
FIG. 6 is a cross-sectional view of the composite body taken along line VI-VI of the composite airfoil of FIG. 4, in accordance with an exemplary embodiment of the present disclosure.
FIG. 7 is another exemplary schematic perspective view of the composite body of the composite airfoil of FIG. 3, in accordance with the present disclosure.
FIG. 8 is a cross-sectional view of the composite body taken along line VIII-VIII of the composite airfoil of FIG. 7, in accordance with an exemplary embodiment of the present disclosure.
FIG. 9 is a schematic diagram of a method for manufacturing the composite airfoil assembly of FIG. 3, in accordance with the present disclosure.
FIG. 10 is a schematic cross-sectional view of a gas turbine engine in accordance with another exemplary embodiment of the present disclosure.

### DETAILED DESCRIPTION

Aspects of the disclosure herein are directed to a composite component to be used in an engine component for a turbine engine. The composite component is illustrated as a composite airfoil assembly having a composite airfoil that includes at least a composite body and a composite skin, illustrated as a composite core and a set of composite skins. The composite core can be formed from one or more composite materials. The composite core includes at least two cavities located in a composite body that open onto the outer surface. The at least two cavities are spaced, where portion of the composite body between the at least two spaced cavities defines an interstitial composite element.

The set of composite skins can be coupled, added, fastened, adhered, cured, or any combination thereof, to the composite core. The composite skin overlies the composite body and covers or closes the at least two cavities. Each skin of the set of composite skins has a pressure side and a suction side.

The composite airfoil assembly can be located in the fan section of the turbine engine, however, other locations in the turbine engine are contemplated.

The composite airfoil assembly benefits include a weight benefit from the composite body with at least two cavities. The set of composite skins that overlie the cavities of the composite body provide a smooth airfoil outer surface. The smooth airfoil outer surface provides fewer interruptions to air passing over the composite airfoil assembly.

It should be understood that the disclosure applies to other engine components of the turbine engine, not just an airfoil, such as a disk or combustor liner, in non-limiting examples. Further, while described in terms of a core and
skins used in the manufacture of an airfoil, it will be appreciated that the core and skins of the present disclosure can be applied to any other suitable environment receiving a composite component.

Reference will now be made in detail to aspects of the disclosure, which include one or more examples of that are illustrated in the accompanying drawings. The detailed description uses numerical and letter designations to refer to features in the drawings. Like or similar designations in the drawings and description have been used to refer to like or similar parts of the disclosure. The drawings are for purposes of illustration only and the dimensions, positions, order and relative sizes reflected in the drawings attached hereto can vary. That is, aspects of the drawings are not scaled, and elements are often exaggerated to ease description and explanation.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third", or "fourth" may be used interchangeably to distinguish one component from another and are not intended to signify location or importance of the individual components.

The term "at least one of" in the context of, e.g., "at least one of A, B, and C" refers to only A, only B, only C, or any combination of A, B, and C.

The term "turbomachine" or "turbomachinery" refers to a machine including one or more compressors, a heat generating section (e.g., a combustion section), and one or more turbines that together generate a torque output.

The term "turbine engine" refers to an engine having a turbomachine as all or a portion of its power source. Example turbine engines include turbofan engines, turboprop engines, turbojet engines, turboshaft engines, etc., as well as hybrid-electric versions of one or more of these engines.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

As used herein, the term "upstream" refers to a direction that is opposite the fluid flow direction, and the term "downstream" refers to a direction that is in the same direction as the fluid flow. The terms "fore" or "forward" mean in front of something and "aft" or "rearward" mean behind something. For example, when used in terms of fluid flow, fore/forward can mean upstream and aft/rearward can mean downstream.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. For example, in the overall context of a turbine engine, radial refers to a direction along a ray extending between a center longitudinal axis of the engine and an outer engine circumference. In addition, as used herein, the terms "circumferential" and "circumferentially" refer to directions and orientations that extend arcuately about the centerline of the turbine engine.

The terms "coupled," "fixed," "applied to," "attached to" and the like refer to both direct coupling, fixing, or attaching, as well as indirect coupling, fixing, or attaching through one or more intermediate components or features, unless otherwise specified herein.

All directional references (e.g., radial, axial, upper, lower, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

The term "composite," as used herein, is indicative of a component having two or more materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, polymeric resins, thermoplastics, bismaleimide (BMI) materials, polyimide materials, epoxy resins, glass fibers, and silicon matrix materials.

As used herein, a "composite" component refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

As used herein, PMC refers to a class of materials. By way of example, the PMC material is defined in part by a prepreg, which is a reinforcement material pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of non-limiting example electrostatically, and then adhered to the fiber, by way of non-limiting example, in an oven or with the assistance of heated rollers. The prepregs can be in the form of unidirectional tapes or woven fabrics, which are then stacked on top of one another to create the number of stacked plies desired for the part.

Multiple layers of prepreg are stacked to the proper thickness and orientation for the composite component and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg, in another non-limiting example, with the use of thermoplastic polymers, it is possible to utilize a woven fabric. Woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers or matrix material to a mold or cavity. The dry fibers or matrix material can include prepreg, braided material, woven material, or any combination thereof.

Resin can be pumped into or otherwise provided to the mold or cavity to impregnate the dry fibers or matrix material. The combination of the impregnated fibers or matrix material and the resin are then cured and removed from the mold. When removed from the mold, the composite component can require post-curing processing.

It is contemplated that RTM can be a vacuum assisted process. That is, the air from the cavity or mold can be removed and replaced by the resin prior to curing. It is further contemplated that the placement of the dry fibers, pre-preg, or matrix material can be manual or automated.

The dry fibers or matrix material can be contoured to shape the composite component or direct the resin. Optionally, additional layers or reinforcing layers of material differing from the dry fiber or matrix material can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic components (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain non-limiting examples, the reinforcing fibers may be bundled and/or coated prior to inclusion within the ceramic matrix. For example, bundles of the fibers may be formed as a reinforced tape, such as a unidirectional reinforced tape. A plurality of the tapes may be laid up together to form a preform component. The bundles of fibers can be impregnated with a slurry composition prior to forming the preform or after formation of the preform. The preform may then undergo thermal processing and subsequent chemical processing, such as melt-infiltration with silicon, to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

The reinforcing fibers can be at least portions of individual filaments or strands. As used herein, a "ceramic fiber tow," a "fiber tow," or simply a "tow" refers to a bundle of a plurality of individual fibers, filaments, or loose strands. The filaments of a tow may be randomly intermingled or arranged in a pattern, and/or may be continuous or non-continuous. For example, a tow may include broken filaments or filament segments. As another example, the filaments of a tow may be substantially parallel, twisted, or otherwise arranged. A tow may act substantially in the same manner as a single or individual filament. It will also be appreciated that an "individual ceramic filament," or simply an "individual filament," as used herein, refers to a singular or non-bundled elongate ceramic member.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many turbine components used in higher temperature sections of turbine engines, such as airfoils (e.g., turbine blades, and vanes), combustors, shrouds, and other like components, which would benefit from the lighter-weight and higher temperature capability these materials can offer.

The term "metallic" as used herein is indicative of a material that includes metal such as, but not limited to, titanium, iron, aluminum, stainless steel, brass, copper, cobalt, lithium and nickel alloys. A metallic material or alloy can be a combination of at least two or more elements or materials, where at least one is a metal. As used herein, the term "additive manufacturing" generally refers to manufacturing processes wherein a feedstock of material in a particulate powder or wire form aggregates to form a three-dimensional component. The feedstock material is then fused through the application of heat or other curing processes to form a monolithic unitary component, which can have a variety of integral sub-components. Monolithic, as used herein, refers to a unitary structure lacking interfaces or joints by virtue of the materials of each layer fusing to or melting with the materials of adjacent layers such that the individual layers lose their identity in the final unitary structure. The term "adjacent" as used herein is indicative of elements that are positioned next to each other, with or without direct contact.

Suitable additive manufacturing techniques in accordance with the present disclosure include, for example, directed energy deposition (DED), fused deposition modeling (FDM), selective laser sintering (SLS), 3D printing such as by inkjets and laserjets, stereolithography (SLA), direct selective laser sintering (DSLS), electron beam sintering (EBS), electron beam melting (EBM), laser engineered net shaping (LENS), laser net shape manufacturing (LNSM), direct metal deposition (DMD), digital light processing (DLP), direct selective laser melting (DSLM), selective laser melting (SLM), direct metal laser melting (DMLM), and other known processes.

Digital light processing (DLP) can include a 3D DLP printer having a transparent vat or transparent tank, a building platform, and a light assembly. The transparent vat or transparent tank can contain, for example, a photopolymer resin.

The DLP building platform can couple to, for example, a motor or other mechanisms permitting the movement of the building platform in one or more dimensions, such as raising or lowering the building platform from or toward the resin in the vat or tank.

A DLP printed component can couple to a lower portion of the building platform facing the vat or tank. The lighting assembly is located, at least in part, below the vat or tank. The lighting assembly can include at least one light source and at least one optical reflector or refractor such as, for example, a deflection mirror or at least one lens.

A controller coupled to or included in the DLP printer can control one or more aspects of the DLP printer such as, for example, the position of the DLP building platform or the intensity, duration, or orientation of the lighting source.

In addition to using a direct metal laser sintering (DMLS), a direct metal laser melting (DMLM) process, or an electron beam melting (EBM) process, where an energy source is used to selectively sinter or melt portions of a layer of powder, it should be appreciated that according to alternative aspects of the present disclosure, the additive manufacturing process can be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent can be, for example, a photo-curable polymer or another liquid bonding agent. Other suitable additive manufacturing methods and variants are intended to be within the scope of the present subject matter.

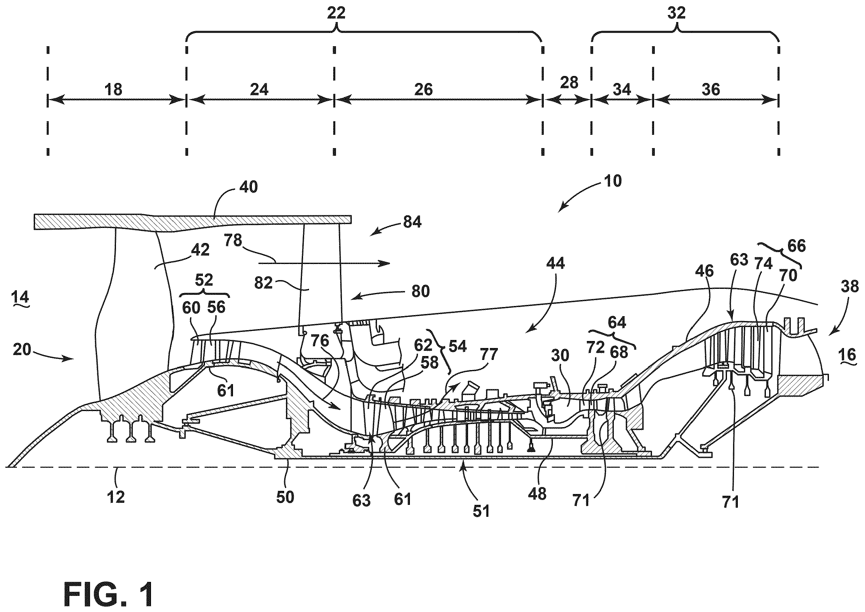

FIG. 1 is a schematic cross-sectional diagram of a turbine engine. The turbine engine 10 has a generally longitudinally extending axis or engine centerline 12 extending from a forward end 14 to an aft end 16. The turbine engine 10 includes, in downstream serial flow relationship, a set of circumferentially spaced blades or propellers defining a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38. The turbine engine 10 as described herein is meant as a non-limiting example, and other architectures are possible, such as, but not limited to, a geared turbofan engine, an open rotor engine, a steam turbine engine, a supercritical carbon dioxide turbine engine, or any other suitable turbine engine.

An exterior surface, defined by a housing, such as a nacelle 40 of the turbine engine 10 extends from the forward end 14 of the turbine engine 10 toward the aft end 16 of the turbine engine 10 and covers at least a portion of the compressor section 22, the combustion section 28, the turbine section 32, and the exhaust section 38. The fan section 18 can be positioned at a forward portion of the nacelle 40 and extends radially outward from the engine centerline 12 towards the nacelle 40 of the turbine engine 10. The fan section 18 includes a set of fan blades 42, and a set of stationary fan vanes 82 downstream the set of fan blades 42, both disposed radially about the engine centerline 12. The turbine engine 10 includes any number of one or more sets of rotating blades or propellers (e.g., the set of fan blades 42) disposed upstream of the set of stationary fan vanes 82. As a non-limiting example, the turbine engine 10 can include multiple sets of fan blades 42 or the set of stationary fan vanes 82. As such, the turbine engine 10 is further defined as an unducted single-fan turbine engine. The turbine engine 10 is further defined by the location of the fan section 18 with respect to the combustion section 28. The fan section 18 can be upstream, downstream, or in-line with the axial positioning of the combustion section 28.

The compressor section 22, the combustion section 28, and the turbine section 32 are collectively referred to as an engine core 44, which generates combustion gases. The engine core 44 is surrounded by an engine casing 46, which is operatively coupled with a portion of the nacelle 40 of the turbine engine 10.

A HP shaft or spool 48 disposed coaxially about the engine centerline 12 of the turbine engine 10 drivingly connects the HP turbine 34 to the HP compressor 26. A LP shaft or spool 50, which is disposed coaxially about the engine centerline 12 of the turbine engine 10 within the larger diameter annular HP spool 48, drivingly connects the LP turbine 36 to the LP compressor 24 and fan 20. The HP spool 48 and the LP spool 50 are rotatable about the engine centerline 12 and couple to a set of rotatable elements, which collectively define a rotor 51.

It will be appreciated that the turbine engine 10 is either a direct drive or integral drive engine utilizing a reduction gearbox coupling the LP shaft or spool 50 to the fan 20.

The LP compressor 24 and the HP compressor 26, respectively, include a set of compressor stages 52, 54, in which a set of compressor blades 56, 58 rotate relative to a corresponding set of static compressor vanes 60, 62 (also called a nozzle) to compress or pressurize the stream of fluid passing through the stage. Each compressor stage of the compressor stages 52, 54 includes multiple compressor blades 56, 58 are provided in a ring and extend radially outwardly relative to the engine centerline 12, from a blade platform to a blade tip, while the corresponding static compressor vanes 60, 62 are positioned upstream of and adjacent to the compressor blades 56, 58. It is noted that the number of blades, vanes, and compressor stages shown in FIG. 1 were selected for illustrative purposes only, and that other numbers are possible.

The compressor blades 56, 58 for a stage of the compressor are mounted to a disk 61, which is mounted to the corresponding one of the HP and LP spools 48, 50, with each stage having its own disk 61. The static compressor vanes 60, 62 for a stage of the compressor are mounted to the engine casing 46 in a circumferential arrangement.

The HP turbine 34 and the LP turbine 36, respectively, include a set of turbine stages 64, 66, in which a set of turbine blades 68, 70 are rotated relative to a corresponding set of static turbine vanes 72, 74 (also called a nozzle) to extract energy from the stream of fluid passing through the stage. Each turbine stage in the turbine stages 64, 66 includes multiple turbine blades 68, 70 that can be provided in a ring and extends radially outwardly relative to the engine centerline 12, from a blade platform to a blade tip, while the corresponding static turbine vanes 72, 74 are positioned upstream of and adjacent to the turbine blades 68, 70. It is noted that the number of blades, vanes, and turbine stages shown in FIG. 1 were selected for illustrative purposes only, and that other numbers are possible.

The turbine blades 68, 70 for a stage of the turbine section 32 are mounted to a disk 71, which is mounted to the corresponding one of the HP and LP spools 48, 50, with each stage having a dedicated disk 71. The static turbine vanes 72, 74 for a stage of the turbine section 32 are to be mounted to the engine casing 46 in a circumferential arrangement.

Rotary portions of the turbine engine 10, such as the blades 56, 58 68, 70 among the compressor section 22 and the turbine section 32 are also referred to individually or collectively as the rotor 51. As such, the rotor refers to the combination of rotating elements throughout the turbine engine 10.

Complementary to the rotor portion, the stationary portions of the turbine engine 10, such as the static compressor vanes 60, 62, and static turbine vanes 72, 74 among the compressor section 22 and the turbine section 32 respectively, are also referred to individually or collectively as a stator 63. As such, the stator 63 refers to the combination of non-rotating elements throughout the turbine engine 10.

The nacelle 40 is operatively coupled to the turbine engine 10 and covers at least a portion of the engine core 44, the engine casing 46, or the exhaust section 38. At least a portion of the nacelle 40 extends axially forward or upstream the illustrated position. For example, the nacelle 40 extends axially forward such that a portion of the nacelle 40 overlays or covers a portion of the fan section 18 or a booster section (not illustrated) of the turbine engine 10.

During operation of the turbine engine 10, a freestream airflow 80 flows against a forward portion of the turbine engine 10. A portion of the freestream airflow 80 enters an annular area 25 defined by the swept area between the outer surface of the nacelle 40 and the tip of the blade, with this air flow being an inlet airflow 78. A portion of the inlet airflow 78 enters the engine core 44 and is described as a working airflow 76, which is used for combustion within the engine core 44.

More specifically, the working airflow 76 flows into the LP compressor 24, which then pressurizes the working airflow 76 thus defining a pressurized airflow that is supplied to the HP compressor 26, which further pressurizes the air. The working airflow 76, or the pressurized airflow, from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the working airflow 76, or exhaust gas, is ultimately discharged from the turbine engine 10 via the exhaust section 38. The driving of the LP turbine 36 drives the LP spool 50 to rotate the fan 20 and the LP compressor 24. The working airflow 76, including the pressurized airflow and the combustion gases, defines a working airflow that flows through the compressor section 22, the combustion section 28, and the turbine section 32 of the turbine engine 10.

The inlet airflow 78 flows through the set of fan blades 42 and over the nacelle 40 of the turbine engine 10. Subsequently, the inlet airflow 78 flows over at least a portion of the set of stationary fan vanes 82, which directs the inlet airflow 78 such that it is transverse toward the engine centerline 12. The inlet airflow 78 then flows past the set of stationary fan vanes 82, following the curvature of the nacelle 40 and toward the exhaust section 38. A pylon 84 mounts the turbine engine 10 to an exterior structure (e.g., a fuselage of an aircraft, a wing, a tail wing, etc.).

The working airflow 76 and at least some of the inlet airflow 78 merge downstream of the exhaust section 38 of the turbine engine 10. The working airflow 76 and the inlet airflow 78, together, form an overall thrust of the turbine engine 10.

It is contemplated that a portion of the working airflow 76 is drawn as bleed air 77 (e.g., from the compressor section 22). The bleed air 77 provides an airflow to engine components requiring cooling. The temperature of the working airflow 76 exiting the combustor 30 is significantly increased with respect to the working airflow 76 within the compressor section 22. As such, cooling provided by the bleed air 77 is necessary for operating of such engine components in the heightened temperature environments or a hot portion of the turbine engine 10. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid are, but are not limited to, fluid discharged from the LP compressor 24 or the HP compressor 26.

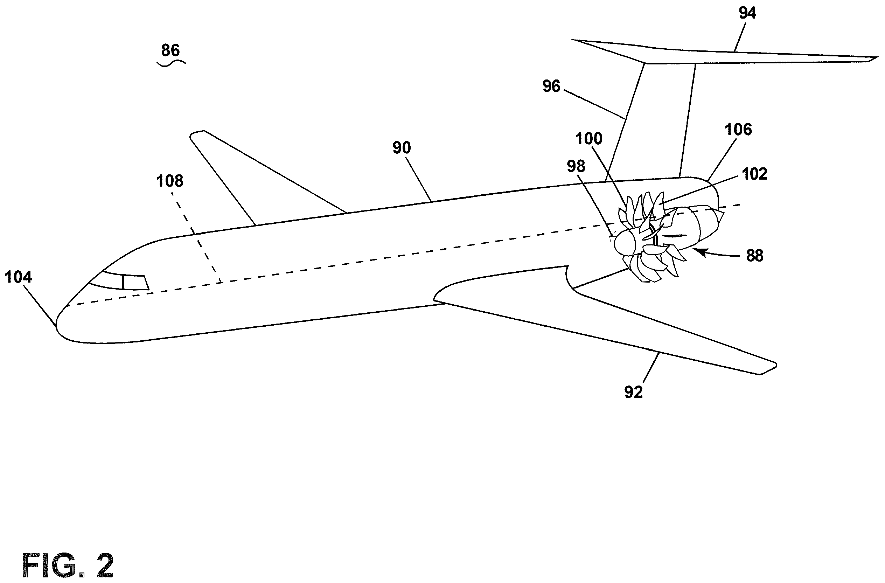

FIG. 2 is a schematic perspective view of an aircraft 86 including a generic unducted turbine engine 88 suitable for use as the turbine engine 10 of FIG. 1 where at least the nacelle 40 (FIG. 1) is removed.

The aircraft 86 includes a fuselage 90 with an exterior surface. At least one wing 92 and a tail wing 94 extend from the fuselage 90. The tail wing 94 is operably coupled to and spaced from the fuselage 90 via a tail wing pylon 96. The unducted turbine engine 88 is operably coupled to the exterior surface of the fuselage 90 via a pylon 98. The unducted turbine engine 88 includes a set of circumferentially spaced fan blades 100. A set of stationary fan vanes 102 is provided downstream of the set of circumferentially spaced fan blades 100. The fuselage 90 extends between a nose 104 and a tail 106 and includes a fuselage centerline 108 extending therebetween.

Additionally, while the tail wing 94 is a T-wing tail wing (e.g., the tail wing 94 as illustrated), other conventional tail wings are contemplated such as, a cruciform tail wing, an H-tail, a triple tail, a V-tail, an inverted tail, a Y-tail, a twin-tail, a boom-mounted tail, or a ring tail, all of which are referred to herein as the tail wing 94.

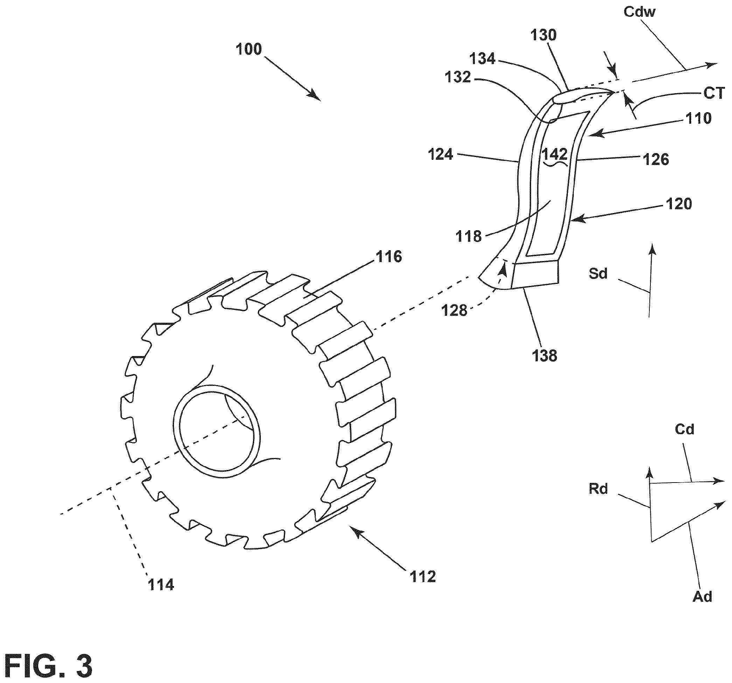

FIG. 3 is a schematic perspective view of a composite airfoil assembly 110 and a disk assembly 112 suitable for use within the turbine engine 10 of FIG. 1 or the unducted turbine engine 88 of FIG. 2. The disk assembly 112 is suitable for use as the disk 61, 71 (FIG. 1) or any other disk such as, but not limited to, a disk within the fan section 18, the compressor section 22, or the turbine section 32 of the turbine engine 10. The composite airfoil assembly 110 can be rotating or non-rotating such that the composite airfoil assembly 110 can include at least one of the static compressor vanes 60, 62 (FIG. 1), the set of compressor blades 56, 58 (FIG. 1), the static turbine vanes 72, 74 (FIG. 1), the set of turbine blades 68, 70 (FIG. 1), or the set of fan blades 42 (FIG. 1). As a non-limiting example, the composite airfoil assembly 110 can be a composite fan blade assembly. As another non-limiting example, the composite airfoil assembly 110 can be a fixed pitch blade or variable pitch blade.

The disk assembly 112 can be rotatable or stationary about a rotational axis 114. The rotational axis 114 can coincide with or be offset from the engine centerline (e.g., the engine centerline 12 of FIG. 1). The disk assembly 112 includes a plurality of slots 116 extending axially through a radially outer portion of the disk assembly 112 and being circumferentially spaced about the disk assembly 112, with respect to the rotational axis 114.

The composite airfoil assembly 110 includes a composite airfoil 118 and a cladding 120. The composite airfoil 118 extends between a leading edge 124 and a trailing edge 126, opposite the leading edge 124, to define a chord-wise direction (Cdw). The composite airfoil 118 extends between a root 128 and a tip 130 to define a span-wise direction (Sd). An airfoil outer surface 142 of the composite airfoil assembly 110 is defined by a pressure side 132 and a suction side 134, opposite the pressure side 132. The pressure side 132 and the suction side 134 extend radially in the radial direction from the root 128 to the tip 130. The suction side 134 can mirror the pressure side 132 and have the same surface area. However, it is contemplated that the surface area of the suction side can be less than or greater than the surface area of the pressure side 132.

The leading edge 124 and the trailing edge 126, extend radially from the root 128 to the tip 130. A dovetail portion 138 can extend from the composite airfoil 118.

The composite airfoil assembly 110 is coupled to the disk assembly 112 by inserting at least a portion of the dovetail portion 138 into a respective slot of the plurality of slots 116. The composite airfoil assembly 110 is held in place by frictional contact with the slot 116 or can be coupled to the slot 116 via any suitable coupling method such as, but not limited to, welding, adhesion, fastening, or the like. While only a single composite airfoil assembly 110 is illustrated, it will be appreciated that there can be any number of the composite airfoil assemblies 110 coupled to the disk assembly 112. As a non-limiting example, there can be a plurality of the composite airfoil assemblies 110 corresponding to a total number of slots of the plurality of slots 116.

For the sake of reference, a set of relative reference directions, along with a coordinate system can be applied to the composite airfoil assembly 110. A circumferential direction (Cd) can extend from forward to aft and is shown extending at least partially into the page. The circumferential direction (Cd) can be arranged parallel to the rotational axis 114. A radial direction (Rd) extends perpendicular to the circumferential direction (Cd) and can extend perpendicular to the rotational axis 114, the engine centerline 12, or both. An axial direction (Ad) can be defined perpendicular to the radial direction (Rd) and can be defined along the circumference of the turbine engine 10 (FIG. 1) relative to the engine centerline 12 (FIG. 1). A composite body thickness (CT) can be measured, for example, from the pressure side 132 to the suction side 134, in a direction perpendicular to the chord-wise direction (Cd).

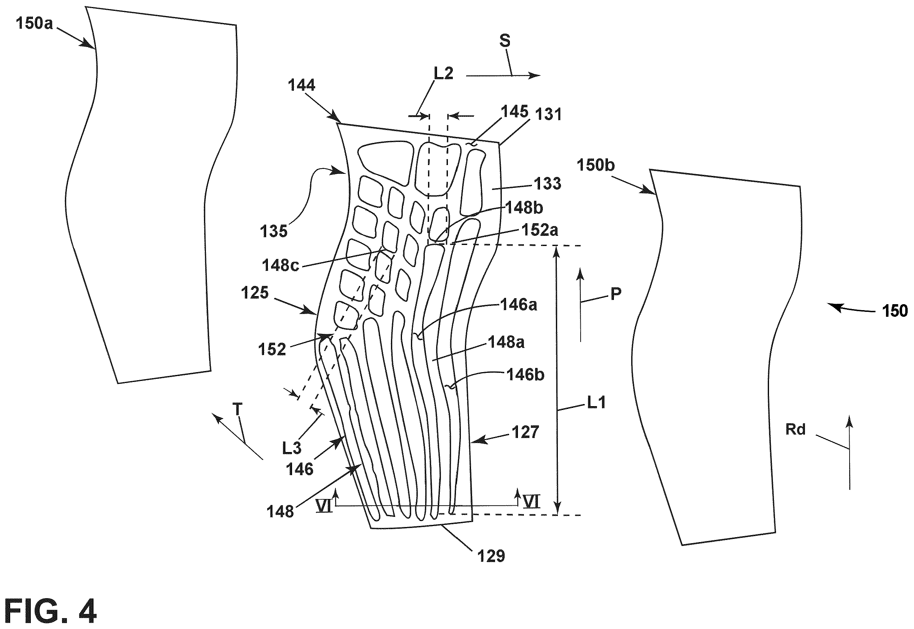

FIG. 4 is a schematic exploded view of the composite airfoil assembly 110 of FIG. 3 including a composite body 144, and a composite skin 150. That is, FIG. 4 illustrates the exploded view of the composite airfoil assembly 110 with the cladding 120 (FIG. 3) removed for ease of understanding.

The composite body 144 includes an outer surface 145 defining a pressure side 133 that confronts or is closest to the pressure side 132 (FIG. 3) of the composite airfoil assembly 110, and a suction side 135 that confronts or faces the suction side 134 (FIG. 3) of the composite airfoil assembly 110. The pressure side 133 and the suction side 135 of the composite body 144 extend between a leading edge 125 and a trailing edge 127 of the composite body 144 in the chord-wise direction (Cd) (FIG. 3) and between a root 129 and a tip 131 of the composite body 144 in the span-wise direction (FIG.3).

The composite body 144 includes a layup of fibers. In a non-limiting example, the composite body can be a woven core. The woven core can be dry, with no additional materials, or alternatively, impregnated with a resin and cured in one non-limiting example. The woven core can include a composite structure made of a woven structure. Such a woven structure can be a three-dimensional woven structure. More specifically, the woven structure can be woven in a combination of the circumferential direction (Cd), the radial direction (Rd), and the axial direction (Ad) (FIG. 3), while it should be appreciated that a weave pattern can be formed and defined separate from the turbine engine 10 (FIG. 1), such that the weave pattern is woven in any three, mutually-orthogonal planes in order to define a three-dimensional object relative to said planes. In one non-limiting example, the woven structure can include a three-dimensional weaving including a plurality of warp fibers and a plurality of weft fibers which can be woven in three directions to form a three-dimensional structure for the woven core. The three directions for the warp fibers and weft fibers can be defined along or angled relative to the circumferential direction (Cd), the radial direction (Rd), and the axial direction (Ad) (FIG. 3). In one non-limiting example, a Jacquard loom, or 3D weaving machine can be used to create complex three-dimensional woven structures, which can include interweaving one or more composites to form the woven core. The woven core can be comprised of composite materials, such as carbon or carbon fibers, glass or glass fibers, nylon, rayon, poly-para-phenylene terephthalamide fibers or other aramid fibers, while other materials such as nickel, steel, titanium, metal fibers, or ceramic composites are also contemplated in non-limiting examples.

It is further contemplated that the woven core can be formed as a three-dimensional woven structure, having a braided or a plaited geometry or pattern. A braided or a plaited geometry or pattern can include a weave pattern that includes three or more interlaced fibers that are woven in a repeating pattern, for example. In another non-limiting example, the braided geometry can include a set of fibers or strands that are sequentially laid over one another to define the braided geometry. The woven or braided geometry or pattern can repeat for the entirety of the woven core, or only a portion thereof. Such additional braided geometries can be similar, where the arrangement of the fibers is the same, but the orientation is different, or where the arrangement of the fibers is different, and the orientation can be similar or dissimilar. The braided geometry or pattern can be formed with a Jacquard loom or 3D weaving machine with composite materials. A three-dimensional braided structure can include a braided pattern that extends in three dimensions, such as a combination of the circumferential direction (Cd), the radial direction (Rd), and the axial direction (Ad) (FIG. 3).

A plurality of cavities 146, including at least two cavities 146a, 146b, are located in the composite body 144. The plurality of cavities 146 open onto the outer surface 145 in at least one location. In the non-limiting example shown, the plurality of cavities 146 are a plurality of through holes extending from the pressure side 133 to the suction side 135 of the composite body 144. That is, the plurality of cavities 146, open onto the outer surface 145 in two locations; one on the pressure side 133 and one on the suction side 135 of the composite body 144. While illustrated as having twenty-two cavities, the plurality of cavities 146 can include any number of cavities greater than or equal to two cavities. While illustrated as through holes extending from the pressure side 133 to the suction side 135 of the composite body 144, it is contemplated that any number of cavities of the plurality of cavities 146 can be through holes from the pressure side 133 to the suction side 135, recesses that opens to the outer surface 145 on the pressure side 133 or the suction side 135, or any combination thereof.

An interstitial composite element, illustrated as a plurality of interstitial composite elements 148, is formed from the composite body 144. Each interstitial composite element of the plurality of interstitial composite elements 148 is defined by portions of at least two cavities of the plurality of cavities 146. In other words, portions of the composite body 144 that extend between two or more cavities of the plurality of cavities 146 form the plurality of interstitial composite elements 148.

For example, the at least two cavities 146a, 146b are in a spaced relationship to define a first interstitial composite element 148a (hereinafter "first element") located between the at least two cavities 146a, 146b. In the non-limiting example shown, the composite body 144 is illustrated as including the first element 148a, a second element 148b, and a third element 148c. The first element 148a includes a first element length L1 measured along the greatest dimension of the first element 148a. The first element length L1 defines a primary axis P in the direction of the longest dimension of the first element 148a. In the non-limiting example shown, the primary axis P extends along the radial direction (Rd).

The second element 148b has a second element length L2 measured along the greatest dimension of the second element 148b. The second element length L2 defines a secondary axis S. In a non-limiting example, the secondary axis S can be perpendicular to the primary axis P.

The third element 148c has a third element length L3 measured along the greatest dimension of the third element 148c. The third element length L3 defines a tertiary axis T. In a non-limiting example, the tertiary axis T can be angled between the primary axis P and the secondary axis S. In the non-limiting example shown, the tertiary axis T is at 45° with respect to the primary axis P. It is contemplated in a non-limiting example, that the tertiary axis T can be in a range of 30° to 60° with respect to the primary axis P.

A plurality of junctions 152 couple adjacent interstitial elements of the plurality of interstitial composite elements 148. In other words, each junction of the plurality of junctions 152 is defined by the intersection of two or more interstitial composite elements 148. In the non-limiting example shown, a first junction 152a is defined by the intersection of the first element 148a, the second element 148b, and a fourth element 148d. While the first junction 152a is shown as an intersection of three interstitial composite elements any junction of the plurality of junctions 152 can couple any number of interstitial composite elements of the plurality of interstitial composite elements 148. For example, it is contemplated that one or more junctions of the plurality of junctions 152 can include an intersection of two, four, five, or more interstitial composite elements of the plurality of interstitial composite elements 148.

The composite skin 150 overlies the composite body 144. That is, the composite skin 150 covers the at least two cavities 146a, 146b. At least one element of the plurality of interstitial composite elements 148 that defines the portion of the pressure side 133 of the composite body 144 or the suction side 135 of the composite body 144 is coupled to the composite skin 150. In other words, the composite skin 150 overlays the composite body 144, coupling to the plurality of interstitial composite elements 148. The composite skin 150 can close, cover, or otherwise define a portion of the plurality of cavities 146 that are now enclosed within the composite airfoil assembly 110.

In the non-limiting example shown, the composite skin 150 is a set of skins illustrated as a first skin 150a and a second skin 150b, although any number of skins are contemplated in the set of skins that define the composite skin 150. The first skin 150a is a pressure side skin. That is, the first skin 150a is coupled to or located on the pressure side 133 of the composite body 144. An outer portion of the first skin 150a defines at least a portion of the pressure side 132 of the composite airfoil assembly 110 (FIG. 2). The second skin 150b is a suction side skin. That is, the second skin 150b is coupled to or located on the located on the suction side 135 of the composite body 144. An outer portion of the second skin 150b defines at least a portion of the suction side 134 of the composite airfoil assembly 110 (FIG. 2).

The first skin 150a and the second skin 150b circumscribe or wraps around at least part of the outer surface 145. The composite skin 150 can be, for example, a laminate skin. The laminate skin can be pre-impregnated, fiber placed, or dry fiber laminate layers, in non-limiting examples. Such laminate layers forming the laminate skin can be formed by resin transfer molding (RTM), partial RTM, same qualified resin transfer molding (SQRTM), or out-of-autoclave in non-limiting examples. The composite body 144 can be made from a different material than the composite skin 150.

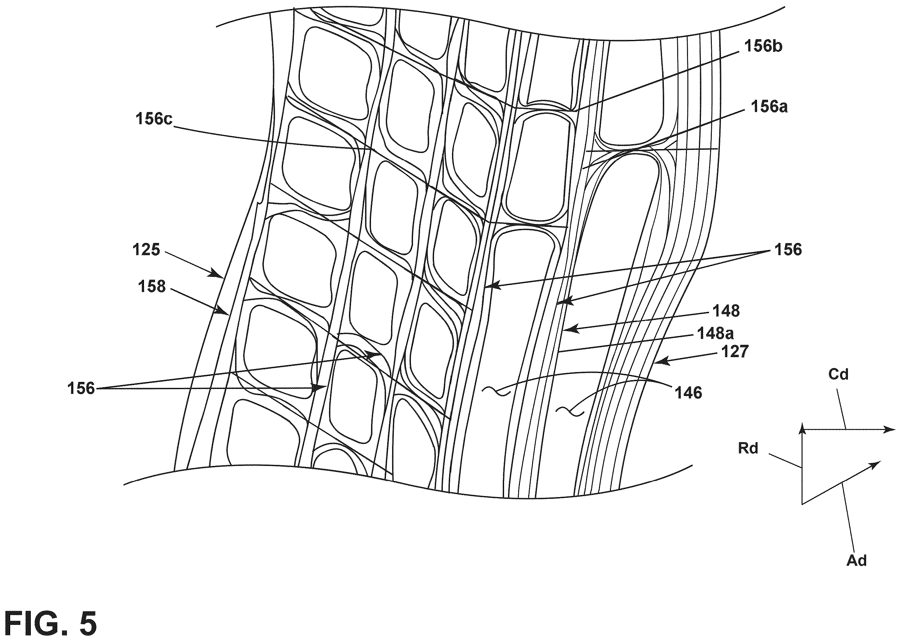

FIG. 5 is an enlarged view of the composite body 144 for use with the composite airfoil assembly 110 of FIG. 3. In the non-limiting example shown, the composite body includes a set of plies 158. The set of plies 158 includes a plurality of fibers 156. At least a portion of the plurality of fibers 156 can be continuous along a length of the set of plies 158. Continuous fiber plies can help avoid relying on the interlaminar capability of the airfoil material to resist stresses on the airfoil. The continuous fibers may be maintained, e.g., by wrapping each of the set of plies 158 from one of pressure and suction sides 132, 134 to the other of pressure and suction sides 132, 134 around one or both of leading and trailing edges 124, 126.

In the non-limiting example shown, the first element 148a includes a first fiber 156a. The first fiber 156a extends along the primary axis P (FIG. 4) from the root 128 to the tip 130. That is, the primary axis P defines a fiber direction of 0° with respect to the span-wise direction (Sd) (FIG. 3). Similarly, the second element 148b includes a second fiber 156b. The second fiber 156b extends along the secondary axis S (FIG. 4). The secondary axis S defines a fiber direction of 90° with respect to the span-wise direction (Sd). The third element 148c includes a third fiber 156c. The third fiber 156c extends along the tertiary axis T (FIG. 4). The tertiary axis T defines a fiber direction between 0° and 90° with respect to the span-wise direction (Sd) and the chord-wise direction (Cd). In the non-limiting example shown, the tertiary axis T defines a fiber direction of 45° with respect to the span-wise direction (Sd) and the chord-wise direction (Cd). That is, the third fiber 156c extends in both the span-wise (Sd) and chord-wise directions (Cd). It is contemplated that the primary axis P, secondary axis S, and tertiary axis T may vary by range of -5 degrees to 5 degrees with respect to the chord-wise direction (Cd) and the span-wise direction (Sd). While only three fiber and ply directions are described, any number of fiber and ply directions are contemplated.

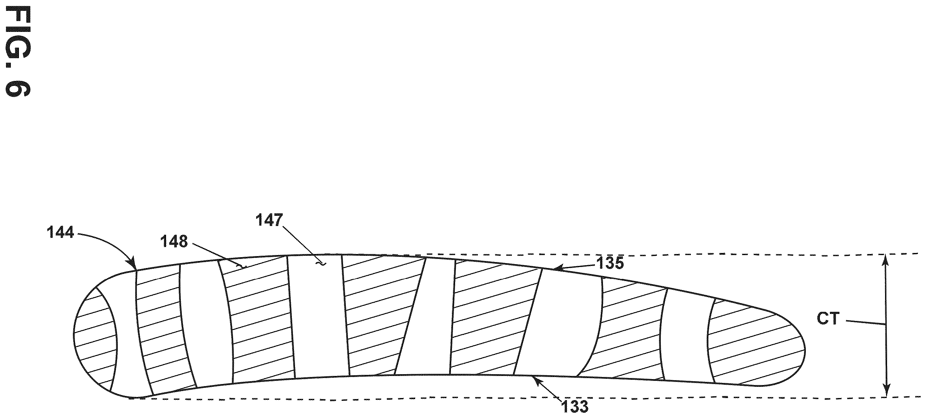

FIG. 6 is a cross-sectional view along line VI-VI of FIG. 4 of the exemplary composite body 144 for use with the composite airfoil assembly 110 of FIG. 3. In the non-limiting example shown, the composite body 144 includes a plurality of interstitial composite elements 148. Each interstitial composite element 148 defining a portion of the plurality of cavities 146. In the non-limiting example shown, the plurality of cavities 146 are through thickness cavities 147 that extend from the pressure side 133 to the suction side 135 of the composite body 144. That is, the through thickness cavities 147 extend through the entire composite body thickness CT. While each cavity 146 in the plurality of cavities is shown as a through thickness cavity 147, it is contemplated in a non-limiting example, that a subset of a total number of cavities 146 can be through thickness cavities 147.

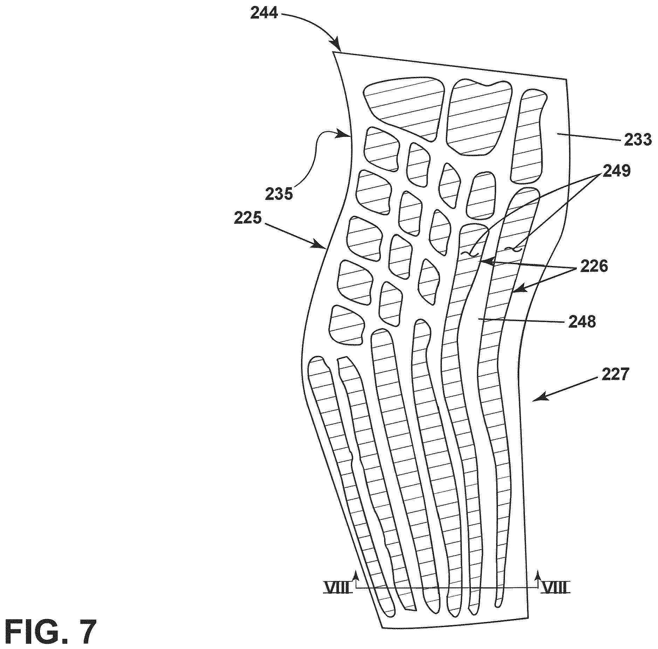

FIG. 7 is a perspective view of another exemplary composite body 244 for use with the composite airfoil assembly 110 of FIG. 3. The composite 244 is similar to the composite body 144 (FIG. 2), therefore, like parts will be identified with like numerals increased to the 200 series with it being understood that the description of the composite body 144 applies to the composite body 244 unless noted otherwise.

In the non-limiting example shown, a pressure side 233 and a suction side 235 of the composite body 244 extend between a leading edge 225 and a trailing edge 127 of the composite body 244 in the chord-wise direction (Cd) (FIG. 3).

The composite body 244 includes a plurality of interstitial composite elements 248 extending in the angled, span-wise, and chord-wise directions. Each interstitial composite element 248 defining a portion of the plurality of cavities 246. The plurality of cavities 246 are partial through thickness cavities 249 that have a cavity depth measured from an outer surface 245 at the pressure side 233 or the suction side 235. While each cavity of the plurality of cavities 246 is shown as a partial through thickness cavity 249, it is contemplated in a non-limiting example, that a first subset of a total number of cavities 246 can be through thickness cavities 147 (FIG. 4) and a second subset of the total number of cavities 246 can be partial through thickness cavities 249. In another non-limiting example, the plurality of cavities 246 can be filled with a foam, a dry fiber woven or braided core material. Alternatively, or optionally, the dry woven or braided core material is made from either the same or a different fiber material. That is, the composite body 244 can maintain a weight benefit via the plurality of cavities 246 while adding strength to the composite body 244 via the addition of foam.

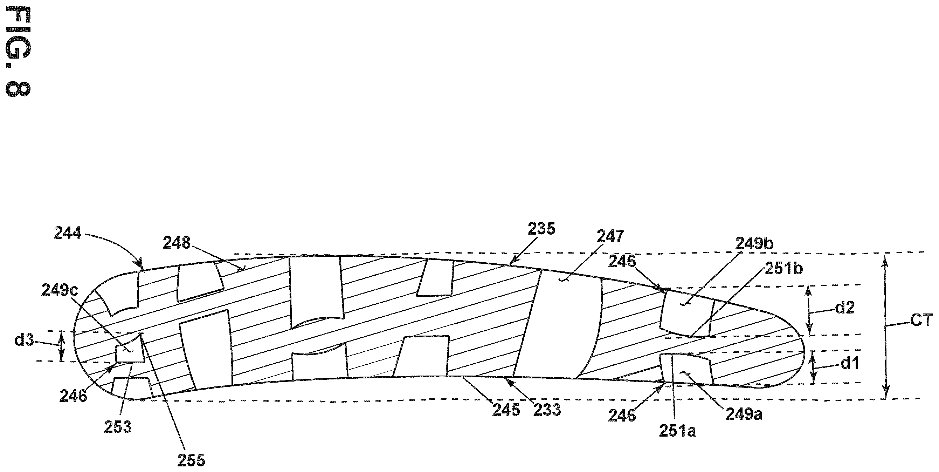

FIG. 8 is a cross-sectional view alone line VIII-VIII of FIG. 7 of the exemplary composite body 244 for use with the composite airfoil assembly 110 of FIG. 3. In the non-limiting example shown, the composite body 244 includes a plurality of interstitial composite elements 248. Each interstitial composite element 248 defining a portion of the plurality of cavities 246. The plurality of cavities 246 are partial through thickness cavities that have a cavity depth measured from the outer surface 245 at the pressure side 233 or the suction side 235. That is, the partial through thickness cavities extend through a portion of the composite body thickness CT. In the non-limiting example shown, the partial through thickness cavities include a first partial through thickness cavity 249a, a second partial through thickness cavity 249b, and a third partial through thickness cavity 249c. The first partial through thickness cavity 249a has a first cavity depth d1 measured from the outer surface 245 at the pressure side 233 to a first base 251a defined as a surface that is farthest extent from the pressure side 233 toward the suction side 235. The second partial through thickness cavity 249b has a second cavity depth d2 measured from the outer surface 245 at the suction side 235 to a second base 251b defined as a surface that is farthest extent from the suction side 235 toward the pressure side 233.

Alternatively, or optionally, the third partial thickness cavity 249c has a third cavity depth d3 measured between a portion of a pressure surface 253 closest to the pressure side 233 and a portion of a suction surface 255 closest to the suction side 235. That is, the third partial through thickness cavity 249c is spaced from each of the pressure side 233 and the suction side 235. While eleven cavities 246 in the plurality of cavities are shown as a partial through thickness cavity, it is contemplated in a non-limiting example, that a subset of a total number of cavities 146 can be through thickness cavities 247.

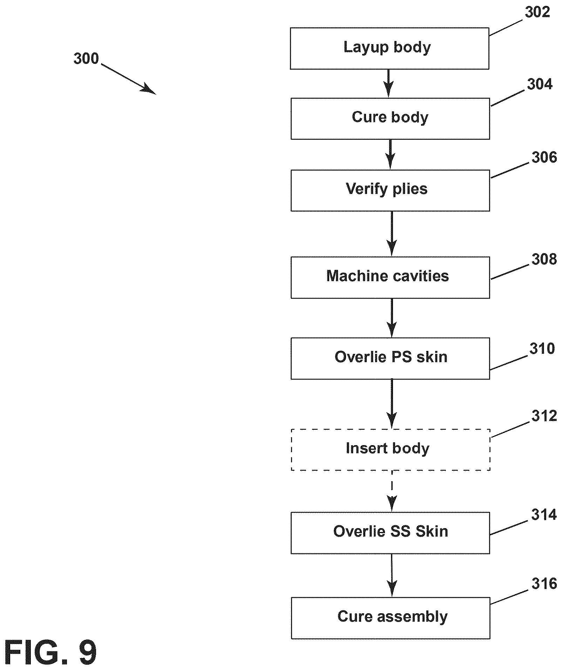

FIG. 9 a schematic diagram of a method 300 of manufacturing an airfoil, such as the composite airfoil assembly 110. At 302, the composite body 144, 244 is laid up. The layup step or portion of the process thus may be referred to as the layup preforming step. The layup preforming step may comprise layering multiple plies or structures, such as plies pre-impregnated (pre-preg) with matrix material, pre-preg tapes, or the like, to form a desired shape of the resultant CMC component, e.g., composite body 144, 244. The layers are stacked to form a layup or preform, which is a precursor to the CMC component. At 304, the composite body 144, 244 can be cured prior to braiding or wrapping the set of composite skins 150. Precuring the composite body 144, 244 can be used to ensure that the composite material of the composite body 144, 244 is fully bonded, and thus as strong as possible. In a non-limiting example, the composite body 144, 244 can be partially cured. That is, the composite body 144, 244 can be cured in a range of 20% to 50%. By partially curing the composite body 144, 244, the composite body 144, 244 is rigid, but still pliable to conform to tooling or machining. The partial curing can be, for example, B-staging where the reaction between the resin and the curing agent/hardener is not complete, which results in the composite body 144, 244 being in a partially cured stage. At 306, the plies of the composite body 144, 244are verified. Ply verification can include verifying directions of the plies and drape. At 308, the cavities 146, 246 are machined into the composite body 144, 244. Types of machining can include, but are not limited to, traditional machining, punch machining, or laser cutting. In a non-limiting example, where the composite body 144, 244 is fully cured, the cavities 146, 246can be machined via water jet machining. At 310, the method includes overlying the first skin 150a or the second skin 150b. That is the composite skins 150 can be braided, wrapped, laminated, or a combination thereof. At 312, the composite body 144, 244 can be inserted. However, this step can be combined with the step at 310. At 314, the method includes overlying the other of the first skin 150a or the second skin 150b. When braiding the set of composite skins 150, the set of composite skins 150 can be braided directly over the corresponding portions of composite body 144, 244. When wrapping the set of composite skins 150 over the corresponding portions of the composite body 144, 244, the set of composite skins 150 can first be woven and then placed or otherwise wrapped over the composite body 144. Once, the set of composite skins 150 and the composite body 144 are laid up. The composite airfoil assembly 110 can be fully cured. Then, the composite airfoil assembly 110 can be utilized for operation. When fully curing the composite airfoil assembly 110, the composite body 144, 244 is reheated to curing temperatures (which is dependent on the resin and the curing agent/hardener), at which point the cross-linking is complete and the composite body 144, 244 within the composite airfoil assembly 110 is fully cured.

The composite airfoils described previously can be assembled to conform with any fan section. This can include any number of engine designs including ducted and unducted engines as well as a direct-drive configuration and an indirect-drive configuration such as a speed reduction device or a geared-drive configuration.

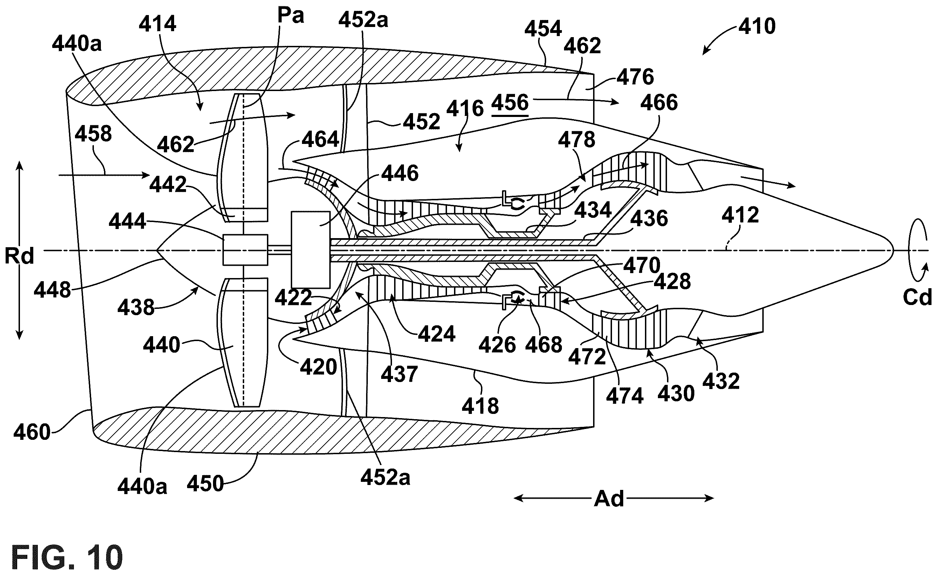

For example, FIG. 10 illustrates a gas turbine engine 410 as a high-bypass turbofan jet engine, sometimes also referred to as a turbofan engine, which can include the set of composite airfoils or first and second stages of composite airfoils as described herein. The gas turbine engine 410 defines an axial direction (Ad) (extending parallel to a longitudinal centerline 412 provided for reference), a radial direction (Rd), and a circumferential direction (Cd) extending about the longitudinal centerline 412. In general, the gas turbine engine 410 includes a fan section 414 and a turbomachine 416 disposed downstream from the fan section 414.

The turbomachine 416 includes a substantially tubular outer casing 418 that defines an annular inlet 420. The outer casing 418 encases, in serial flow relationship, a compressor section including a booster or low pressure (LP) compressor 422 and a high pressure (HP) compressor 424, a combustion section 426, a turbine section including a high pressure (HP) turbine 428 and a low pressure (LP) turbine 430, and a jet exhaust nozzle section 432. A high pressure (HP) shaft 434, which may additionally or alternatively be a spool, drivingly connects the HP turbine 428 to the HP compressor 424. A low pressure (LP) shaft 436, which may additionally or alternatively be a spool, drivingly connects the LP turbine 430 to the LP compressor 422. The compressor section, combustion section 426, turbine section, and jet exhaust nozzle section 432 together define a working gas flow path 437.

In the illustrated example, and by way of non-limiting example, the fan section 414 includes a fan 438 having a plurality of fan blades 440 coupled to a disk 442 in a spaced apart manner. As depicted, the fan blades 440 extend outwardly from disk 442 generally along the radial direction (Rd).

Each fan blade 440 is rotatable relative to the disk 442 about a pitch axis P by virtue of the fan blades 440 being operatively coupled to a pitch change mechanism 444 configured to collectively vary the pitch of the fan blades 440, e.g., in unison.

The gas turbine engine 410 further includes a speed reduction device in the form of a power gearbox 446, and the fan blades 440, the disk 442, and the pitch change mechanism 444 are together rotatable about the longitudinal centerline 412 by the LP shaft 436 across the power gearbox 446. The power gearbox 446 includes a plurality of gears for adjusting a rotational speed of the fan 438 relative to a rotational speed of the LP shaft 436, such that the fan 438 may rotate at a more efficient fan speed. It will be understood that any suitable speed reduction device configured to adjust the rotation of the fan 438 relative to the LP shaft 436 can be utilized and that a power gearbox is merely one example thereof.

The disk 442 is covered by a rotatable front hub 448 of the fan section 414. The front hub 448 is also sometimes referred to as a spinner. The front hub 448 is aerodynamically contoured to promote an airflow through the plurality of fan blades 440.

Additionally, the fan section 414 can include an annular fan casing or outer nacelle 450 that circumferentially surrounds the fan 438, circumferentially surrounds at least a portion of the turbomachine 416, or a combination thereof. It should be appreciated that the nacelle 450 is supported relative to the turbomachine 416 by a plurality of outlet guide vanes 452, which can be a second stage of airfoils in the non-limiting example. Moreover, a downstream section 454 of the nacelle 450 extends over an outer portion of the turbomachine 416 so as to define a bypass airflow passage 456 therebetween.

It will be understood that each fan blade of the plurality of fan blades 440 may form a composite airfoil and that the plurality of fan blades 440 can form a first stage of airfoils as described above. More specifically, each of the plurality of fan blades 440 can include a first leading edge protector 440a. It will be understood that the plurality of fan blades forming the first stage of airfoils are similar to the previously described airfoils with it being understood that the description of like parts applies to the plurality of fan blades unless otherwise noted.

Further still, it will be understood that each outlet guide vane of the plurality of outlet guide vanes 452 may form a composite airfoil. Further still, in the illustrated example, the plurality of outlet guide vanes 452 can form a second stage of airfoils as described above. More specifically, each of the plurality of outlet guide vanes 452 can include a second leading edge protector 452a. It will be understood that an outlet guide vane of the plurality of outlet guide vanes 452 forming the second stage of airfoils is similar to the previously described airfoils with it being understood that the description of like parts applies to the outlet guide vane of the plurality of outlet guide vanes 452 unless otherwise noted.

It will be understood that the plurality of fan blades 440 and the plurality of outlet guide vanes 452 are similar to the previously described composite airfoils.

During operation of the gas turbine engine 410, a volume of air 458 enters the gas turbine engine 410 through an associated inlet 460 of the nacelle 450 and the fan section 414. As the volume of air 458 passes across the fan blades 440, a first portion of air 462 is directed or routed into the bypass airflow passage 456 and a second portion of air 464, as indicated by an arrow, is directed or routed into the working gas flow path 437, or more specifically into the LP compressor 422. The ratio between the first portion of air 462 and the second portion of air 464 is commonly known as a bypass ratio. A pressure of the second portion of air 464 is then increased as it is routed through the HP compressor 424 and into the combustion section 426, where it is mixed with fuel and burned to provide combustion gases 466.

The combustion gases 466 are routed through the HP turbine 428 where a portion of thermal and/or kinetic energy from the combustion gases 466 is extracted via sequential stages of HP turbine stator vanes 468 that are coupled to the outer casing 418 and HP turbine rotor blades 470 that are coupled to the HP shaft 434, thus causing the HP shaft 434 to rotate, which supports operation of the HP compressor 424. The combustion gases 466 are then routed through the LP turbine 430 where a second portion of thermal and kinetic energy is extracted from the combustion gases 466 via sequential stages of LP turbine stator vanes 472 that are coupled to the outer casing 418 and LP turbine rotor blades 474 that are coupled to the LP shaft 436, thus causing the LP shaft 436 to rotate, which supports operation of the LP compressor 422, rotation of the fan 438, or a combination thereof.

The combustion gases 466 are subsequently routed through the jet exhaust nozzle section 432 of the turbomachine 416 to provide propulsive thrust. Simultaneously, the pressure of the first portion of air 462 is substantially increased as the first portion of air 462 is routed through the bypass airflow passage 456 before it is exhausted from a fan nozzle exhaust section 476 of the gas turbine engine 410, also providing propulsive thrust. The HP turbine 428, the LP turbine 430, and the jet exhaust nozzle section 432 at least partially define a hot gas path 478 for routing the combustion gases 466 through the turbomachine 416.

As previously described, the stages of airfoils of the gas turbine engine 410 depicted in FIG. 5 are, by way of example only, and the gas turbine engine 410 may have other configurations. For example, although the gas turbine engine 410 is depicted as configured as a ducted gas turbine engine (i.e., including the outer nacelle, also referred to herein as a turbofan engine), in other embodiments, the gas turbine engine 410 may be an unducted turbine engine (such that the fan 438 is an unducted fan, and the outlet guide vanes 452 are cantilevered from the outer casing 418; see, e.g., FIG. 6; also referred to herein as an open rotor engine). Additionally, or alternatively, although the gas turbine engine 410 is depicted as configured as a variable pitch gas turbine engine (i.e., including a fan 438 configured as a variable pitch fan), in other embodiments, the gas turbine engine 410 may alternatively be configured as a fixed pitch gas turbine engine (such that the fan 438 includes fan blades 440 that are not rotatable about a pitch axis Pa).

Benefits of aspects of the invention include that the composite body with a plurality of interstitial composite elements defined by at least two cavities can provide a weight benefit. By machining the cavities in the composite body or fabricating a composite body with cavities, the interstitial composite elements maintain the strength of the composite airfoil assembly while the cavities maintain a weight benefit. That is, the cavities help reduce the overall airfoil weight.

Further, the set composite skins provide a smooth airfoil outer surface which causes fewer interruptions to air passing over the composite airfoil assembly. Improved aerodynamics result in overall better airflow, which improves engine efficiency.

To the extent not already described, the different features and structures of the various embodiments can be used in combination, or in substitution with each other as desired. That one feature is not illustrated in all of the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

A composite airfoil assembly comprising: A composite body comprising a layup of fibers and having an outer surface defining a pressure side and a suction side extending between a leading edge and a trailing edge to define a chord-wise direction and between a root and a tip to define a span-wise direction; at least two cavities located in the composite body and opening onto the outer surface, the at least two cavities being in spaced relationship to define an interstitial composite element formed from the composite body, and a composite skin overlying the composite body and covering the at least two cavities.

A composite airfoil assembly for a turbine engine, the composite airfoil assembly comprising: a composite body comprising a layup of fibers and having an outer surface defining a pressure side and a suction side extending between a leading edge and a trailing edge to define a chord-wise direction and between a root and a tip to define a span-wise direction; at least two cavities located in the composite body and opening onto the outer surface, wherein the at least two cavities are in a spaced relationship to define an interstitial composite element formed from the composite body; and a composite skin overlying the composite body and covering the at least two cavities.

The composite airfoil assembly of any preceding clause, wherein the composite skin is a set of skins having a pressure side skin and a suction side skin.

The composite airfoil assembly of any preceding clause, wherein the at least two cavities are through thickness cavities extending from the pressure side to the suction side of the composite body.

The composite airfoil assembly of any preceding clause, wherein the interstitial composite element includes a set of plies with a plurality of fibers, the plurality of fibers having a fiber direction.

The composite airfoil assembly of any preceding clause, wherein at least one fiber in the plurality of fibers of the interstitial composite element extends along a primary axis from the root to the tip, wherein the primary axis defines a fiber direction of 0° with respect to the span-wise direction.

The composite airfoil assembly of any preceding clause, wherein at least one fiber in the plurality of fibers of the interstitial composite element extends along a secondary axis, wherein the secondary axis defines a fiber direction of 90° with respect to the span-wise direction.

The composite airfoil assembly of any preceding clause, wherein at least one fiber in the plurality of fibers of the interstitial composite element extends along a tertiary axis, wherein the tertiary axis defines a fiber direction of 45° with respect to the span-wise direction.

The composite airfoil assembly of any preceding clause, wherein the at least two cavities have a cavity depth measured from the outer surface at the pressure side or the suction side.

The composite airfoil assembly of any preceding clause, wherein the at least two cavities are filled with a foam, a dry fiber braided core, or a dry fiber woven core.

The composite airfoil assembly of any preceding clause, wherein the composite body has a composite body thickness measured from the pressure side to the suction side, wherein a partial through thickness cavity extends through a portion of the composite body thickness.

The composite airfoil assembly of any preceding clause, wherein the composite body has a composite body thickness measured from the pressure side to the suction side, wherein at least one cavity of the at least two cavities is a partial through thickness cavity having a cavity depth less than the composite body thickness.

The composite airfoil assembly of any preceding clause, wherein the partial through thickness cavity includes a cavity depth measured from the outer surface at the pressure side or the suction side to a base.

The composite airfoil assembly of any preceding clause, wherein the partial through thickness cavity includes a cavity depth measured between a portion of a pressure surface and a portion of a suction surface.

The composite airfoil assembly of any preceding clause, wherein the composite airfoil assembly is included in an unducted turbine engine.

A composite airfoil assembly comprising: a composite body comprising a layup of fibers and having an outer surface defining a pressure side and a suction side extending between a leading edge and a trailing edge to define a chord-wise direction and between a root and a tip to define a span-wise direction; at least two cavities located in the composite body; an interstitial composite element defining a portion of the outer surface and a portion of the at least two cavities, wherein the interstitial composite element is located between the leading edge and the trailing edge; and a composite skin coupled to the outer surface of the composite body, wherein the composite skin defines at least a portion of the at least two cavities.

A composite airfoil assembly for a turbine engine, the composite airfoil assembly comprising: a composite body comprising a layup of fibers and having an outer surface defining a pressure side and a suction side extending between a leading edge and a trailing edge to define a chord-wise direction and between a root and a tip to define a span-wise direction; at least two cavities located in the composite body; an interstitial composite element defining a portion of the outer surface and a portion of the at least two cavities, wherein the interstitial composite element is located between the leading edge and the trailing edge; and a composite skin coupled to the outer surface of the composite body, wherein the composite skin defines at least a portion of the at least two cavities.

The composite airfoil assembly of any preceding clause, wherein the composite skin is a set of skins having a pressure side skin and a suction side skin.

The composite airfoil assembly of any preceding clause, wherein a portion of the interstitial composite element that defines the portion of the pressure side of the composite body or the suction side of the composite body is coupled to the composite skin.

The composite airfoil assembly of any preceding clause, wherein the at least two cavities have a cavity depth measured from the outer surface at the pressure side or the suction side.

The composite airfoil assembly of any preceding clause, wherein the at least two cavities are through thickness cavities extending from the pressure side to the suction side of the composite body.

The composite airfoil assembly of any preceding clause, wherein the composite body has a composite body thickness measured from the pressure side to the suction side, wherein a partial through thickness cavity extends through a portion of the composite body thickness.

The composite airfoil assembly of any preceding clause, wherein the interstitial composite element includes a set of plies with a plurality of fibers, the plurality of fibers having a fiber direction.

The composite airfoil assembly of any preceding clause, wherein at least one fiber in the plurality of fibers of the interstitial composite element extends along a primary axis from the root to the tip, wherein the primary axis defines a fiber direction of 0° with respect to the span-wise direction.

The composite airfoil assembly of any preceding clause, wherein at least one fiber in the plurality of fibers of the interstitial composite element extends along a secondary axis, wherein the secondary axis defines a fiber direction of 90° with respect to the span-wise direction.

The composite airfoil assembly of any preceding clause, wherein at least one fiber in the plurality of fibers of the interstitial composite element extends along a tertiary axis, wherein the tertiary axis defines a fiber direction of 45° with respect to the span-wise direction.

The composite airfoil assembly of any preceding clause, wherein the composite body has a composite body thickness measured from the pressure side to the suction side, wherein at least one cavity of the at least two cavities is a partial through thickness cavity having a cavity depth less than the composite body thickness.

The composite airfoil assembly of any preceding clause, wherein the partial through thickness cavity includes a cavity depth measured from the outer surface at the pressure side or the suction side to a base.

The composite airfoil assembly of any preceding clause, wherein the partial through thickness cavity includes a cavity depth measured between a portion of a pressure surface and a portion of a suction surface.

The composite airfoil assembly of any preceding clause, wherein the composite airfoil assembly is included in an unducted turbine engine.

A gas turbine engine comprising an composite airfoil assembly comprising: A composite body comprising a layup of fibers and having an outer surface defining a pressure side and a suction side extending between a leading edge and a trailing edge to define a chord-wise direction and between a root and a tip to define a span-wise direction, at least two cavities located in the composite body and opening onto the outer surface, wherein the at least two cavities are in a spaced relationship to define an interstitial composite element formed from the composite body, and a composite skin overlying the composite body and covering the at least two cavities.

The gas turbine engine of any preceding clause, wherein the composite skin is a set of skins having a pressure side skin and a suction side skin.

The gas turbine engine of any preceding clause, wherein the at least two cavities are through thickness cavities extending from the pressure side to the suction side of the composite body.

The gas turbine engine of any preceding clause, wherein the interstitial composite element includes a set of plies with a plurality of fibers, the plurality of fibers having a fiber direction.

The gas turbine engine of any preceding clause, wherein at least one fiber in the plurality of fibers of the interstitial composite element extends along a primary axis from the root to the tip, wherein the primary axis defines a fiber direction of 0° with respect to the span-wise direction.

The gas turbine engine of any preceding clause, wherein at least one fiber in the plurality of fibers of the interstitial composite element extends along a secondary axis, wherein the secondary axis defines a fiber direction of 90° with respect to the span-wise direction.

The gas turbine engine of any preceding clause, wherein at least one fiber in the plurality of fibers of the interstitial composite element extends along a tertiary axis, wherein the tertiary axis defines a fiber direction of 45° with respect to the span-wise direction.

The gas turbine engine of any preceding clause, wherein the at least two cavities have a cavity depth measured from the outer surface at the pressure side or the suction side.

The gas turbine engine of any preceding clause, wherein the at least two cavities are filled with a foam, a dry fiber braided core, or a dry fiber woven core.

The gas turbine engine of any preceding clause, wherein the composite body has a composite body thickness measured from the pressure side to the suction side, wherein a partial through thickness cavity extends through a portion of the composite body thickness.

A gas turbine engine comprising a composite airfoil assembly, the composite airfoil assembly comprising: a composite body comprising a layup of fibers and having an outer surface defining a pressure side and a suction side extending between a leading edge and a trailing edge to define a chord-wise direction and between a root and a tip to define a span-wise direction; at least two cavities located in the composite body; an interstitial composite element defining a portion of the outer surface and portion of the at least two cavities, wherein the interstitial composite element is located between the leading edge and the trailing edge; and a composite skin coupled to the outer surface of the composite body, wherein the composite skin defines at least a portion of the at least two cavities.

The gas turbine engine of any preceding clause, wherein the composite skin is a set of skins having a pressure side skin and a suction side skin.

The gas turbine engine of any preceding clause, wherein a portion of the interstitial composite element that defines the portion of the pressure side of the composite body or the suction side of the composite body is coupled to the composite skin.

The gas turbine engine of any preceding clause, wherein the at least two cavities have a cavity depth measured from the outer surface at the pressure side or the suction side.

The gas turbine engine of any preceding clause, wherein the at least two cavities are through thickness cavities extending from the pressure side to the suction side of the composite body.

The gas turbine engine of any preceding clause, wherein the composite body has a composite body thickness measured from the pressure side to the suction side, wherein a partial through thickness cavity extends through a portion of the composite body thickness.

The gas turbine engine of any preceding clause, wherein the interstitial composite element includes a set of plies with a plurality of fibers, the plurality of fibers having a fiber direction.

The gas turbine engine of any preceding clause, wherein at least one fiber in the plurality of fibers of the interstitial composite element extends along a primary axis from the root to the tip, wherein the primary axis defines a fiber direction of 0° with respect to the span-wise direction.

The gas turbine engine of any preceding clause, wherein at least one fiber in the plurality of fibers of the interstitial composite element extends along a secondary axis, wherein the secondary axis defines a fiber direction of 90° with respect to the span-wise direction.

The gas turbine engine of any preceding clause, wherein at least one fiber in the plurality of fibers of the interstitial composite element extends along a tertiary axis, wherein the tertiary axis defines a fiber direction of 45° with respect to the span-wise direction.

The gas turbine engine of any preceding clause, wherein the composite body has a composite body thickness measured from the pressure side to the suction side, wherein at least one cavity of the at least two cavities is a partial through thickness cavity having a cavity depth less than the composite body thickness.

The gas turbine engine of any preceding clause, wherein the partial through thickness cavity includes a cavity depth measured from the outer surface at the pressure side or the suction side to a base.

The gas turbine engine of any preceding clause, wherein the partial through thickness cavity includes a cavity depth measured between a portion of a pressure surface and a portion of a suction surface.

The gas turbine engine of any preceding clause, wherein the composite airfoil assembly is included in an unducted turbine engine.

A method of manufacturing a composite airfoil assembly comprising laying up a composite body using multiple plies, curing the composite body, verifying the multiple plies of the composite body, machining at least two cavities into the composite body, wherein the at least two cavities open onto an outer surface, and wherein the at least two cavities are in a spaced relationship to define an interstitial composite element formed from the composite body, and applying a skin over the composite body, wherein the skin covers the at least two cavities.

The method of any preceding clause, wherein the laying up of the composite body includes layering multiple plies plies and wherein the interstitial composite element includes at least a portion of the multiple plies as a set of plies with a plurality of fibers, the plurality of fibers having a fiber direction.

The method of any preceding clause, wherein the laying up of the composite body includes layering multiple plies that are pre-impregnated (pre-preg) with matrix material.

The method of any preceding clause, wherein the laying up of the composite body includes stacking multiple plies to form a layup or preform

The method of any preceding clause, wherein the curing the composite body includes precuring the composite body.

The method of any preceding clause, wherein the curing the composite body includes partially curing the composite body in a range of 20% to 50%.

The method of any preceding clause, wherein the verifying the multiple plies includes verifying directions of a drape of the multiple plies.

The method of any preceding clause, wherein the machining the composite body includes traditional machining, punch machining, or laser cutting.

The method of any preceding clause, wherein the machining the composite body includes water jet machining.

The method of any preceding clause, wherein applying a skin includes overlying the composite body with a first skin and a second skin.

The method of any preceding clause, wherein applying a skin includes one or more of braiding, wrapping, or laminating.

The method of any preceding clause, wherein applying a skin includes braiding a set of composite skins directly over corresponding portions of composite body.

The method of any preceding clause, wherein applying a skin includes weaving a set of composite skins that are placed or otherwise wrapped over the composite body.

The method of any preceding clause, further comprising fully curing the composite body and the set of composite skins.

The method of any preceding clause, further comprising fully curing the the set of composite skins.

## Claims

1. A composite airfoil assembly (110) for a turbine engine (10), the composite airfoil assembly (110) comprising:
a composite body (144, 244) comprising a layup of fibers (156) and having an outer surface (145) defining a pressure side (133, 233) and a suction side (135, 235) extending between a leading edge (125) and a trailing edge (127) to define a chord-wise direction and between a root (128) and a tip (130) to define a span-wise direction;
at least two cavities (146, 146a, 146b, 246) located in the composite body (144, 244) and opening onto the outer surface (145), wherein the at least two cavities (146, 146a, 146b, 246) are in a spaced relationship to define an interstitial composite element (148, 248) formed from the composite body (144, 244); and
a composite skin (150) overlying the composite body (144, 244) and covering the at least two cavities (146, 146a, 146b, 246).

2. The composite airfoil assembly (110) of claim 1, wherein the composite skin (150) defines at least a portion of the at least two cavities (146, 146a, 146b, 246).

3. The composite airfoil assembly (110) of any of claims 1-2, wherein the composite skin (150) is a set of skins having a pressure side skin (150a) and a suction side skin (150b).

4. The composite airfoil assembly (110) of claims 1-3, wherein a portion of the interstitial composite element (148, 248) that defines the portion of the pressure side (133, 233) of the composite body (144, 244) or the suction side (135, 235) of the composite body (144, 244) is coupled to the composite skin (150).

5. The composite airfoil assembly (110) of any of claims 1-4, wherein the at least two cavities (146, 146a, 146b, 246) are through thickness cavities (147, 247) extending from the pressure side (133, 233) to the suction side (135, 235) of the composite body (144, 244).

6. The composite airfoil assembly (110) of any of claims 1-5, wherein the interstitial composite element (148, 248) includes a set of plies (158) with a plurality of fibers (156), the plurality of fibers (156) having a fiber direction.

7. The composite airfoil assembly (110) of claim 6, wherein at least one fiber in the plurality of fibers (156) of the interstitial composite element (148, 248) extends along a primary axis (P) from the root (129) to the tip (131), wherein the primary axis (P) defines a fiber direction of 0° with respect to the span-wise direction (Sd).

8. The composite airfoil assembly (110) of claim 6, wherein at least one fiber in the plurality of fibers (156) of the interstitial composite element (148, 248) extends along a secondary axis (S), wherein the secondary axis (S) defines a fiber direction of 90° with respect to the span-wise direction (Sd).

9. The composite airfoil assembly (110) of claim 6, wherein at least one fiber in the plurality of fibers (156) of the interstitial composite element (148, 248) extends along a tertiary axis (T), wherein the tertiary axis (T) defines a fiber direction of 45° with respect to the span-wise direction (Sd).

10. The composite airfoil assembly (110) of any of claims 1-9, wherein the at least two cavities (146, 146a, 146b, 246) have a cavity depth measured from the outer surface (145) at the pressure side (133, 233) or the suction side (135, 235).

11. The composite airfoil assembly (110) of any of claims 1-10, wherein the at least two cavities (146, 146a, 146b, 246) are filled with a foam, a dry fiber braided core, or a dry fiber woven core.

12. The composite airfoil assembly (110) of any of claims 1-11, wherein the composite body (144, 244) has a composite body thickness (CT) measured from the pressure side (133, 233) to the suction side (135, 235), wherein at least one cavity of the at least two cavities (146, 146a, 146b, 149, 149a, 149b, 149c, 246) is a partial through thickness cavity (249, 249a, 249b, 249c) having a cavity depth less than the composite body thickness (CT).

13. The composite airfoil assembly (110) of claim 12, wherein the partial through thickness cavity (249, 249a, 249b, 249c) includes a cavity depth (d1, d2) measured from the outer surface (145, 245) at the pressure side (133, 233) or the suction side (135, 235) to a base (151a, 151b).

14. The composite airfoil assembly (110) of claim 12, wherein the partial through thickness cavity (249, 249a, 249b, 249c) includes a cavity depth (d3) measured between a portion of a pressure surface (153, 253) and a portion of a suction surface (155, 255).

15. The composite airfoil assembly (110) of any of claims 1-14, wherein the composite airfoil assembly (110) is included in an unducted turbine engine.
